# FASCICULE DE BREVET EUROPEEN

(11) **EP 0 334 745 B1**
(45) Date de publication et mention de la délivrance du brevet: **03.02.1993**
(21) Numéro de dépôt: 89400785.5
(22) Date de dépôt: 21.03.1989
(51) Int. Cl.: G06F 3/023, H01H 13/70

(54) **Terminal de communication à composition variable**
Kommunikationsterminal mit veränderbarer Zusammensetzung
Communication terminal having a variable composition

(30) Priorité: 25.03.1988 FR 8803921
(43) Date de publication de la demande: 27.09.1989
(73) Titulaire: SEXTANT AVIONIQUE, F-92366 Meudon la Foret Cédex (FR)
(72) Inventeur: Fagard, Pierre, F-78180 Montigny le Bretonneux (FR)
(74) Mandataire: de Saint-Palais, Arnaud Marie

(56) Documents cités:
- US-A- 4 032 931
- US-A- 4 642 627
- IBM TECHNICAL DISCLOSURE BULLETIN, vol. 27, no. 4A, septembre 1984, pages 2171-2172, New York, US; R.D. MATHEWS: "Contamination shielded retro-reflective overlay sensor"
- IBM TDB v22, no.8B, janvier 1980,p.3542-3543, New-York,US;P.J.Kennedy:"Computer interface device"

## Description

La présente invention concerne un terminal de communication permettant à un opérateur de transmettre ou de recevoir des informations, par exemple dans le cadre d'un échange convivial avec un processeur.

D'une manière générale, on sait que pour assurer ce type de communication, on utilise habituellement des claviers comprenant un ensemble de touches le plus souvent constituées par des boutons-poussoirs, de type électromécanique, regroupées par blocs dans un châssis éventuellement équipé de moyens permettant d'effectuer un affichage.

Bien entendu, à chacun de ces boutons-poussoirs est affecté un symbole ou une légende qui indique sa fonction. Dans le cas de claviers relégendables, ces symboles ou ces légendes peuvent être modifiés pour les approprier à de nouvelles fonctions.

Un mode d'exécution de ce type de clavier, décrit dans la publication IBM Technical Disclosure Bulletin, vol. 27, N° 4A, Septembre 1984, pages 2171-2, fait intervenir une surface tactile recouverte par une feuille de couverture amovible portant les symboles d'identification des touches du clavier. Des moyens sont prévus pour permettre au calculateur associé au clavier d'identifier la feuille de couverture utilisée.

Dans certains cas, ces touches peuvent être directement associées à des moyens d'affichage électroniques pilotés par le processeur, qui indiquent en permanence les fonctions qui leur sont attribuées par une symbologie variable selon le mode de fonctionnement de l'ensemble (touches dynamiques).

Ces terminaux comprennent en outre des moyens de visualisation permettant l'affichage d'informations en provenance du processeur, ces moyens d'affichage pouvant consister en un élément séparé du clavier ou intégré à celui-ci.

On a également proposé (cf la publication IBM Technical Disclosure Bulletin, vol 22, N° 8B, Janvier 1980, pages 3542-3) l'usage d'une surface tactile transparente à structure matricielle apposée sur une plage de visualisation. Toutefois, cette solution ne permet pas d'effectuer une délimitation matérielle des touches du clavier et de l'aire de visualisation.

Toutefois, on constate qu'à l'heure actuelle, il n'existe pas de terminal de communication à composition variable comprenant des moyens d'affichage intégrés au clavier et dans lequel il est possible de modifier aisément à la fois, la forme, le nombre, la disposition, la symbologie des diverses zones d'appui du clavier, ainsi que la forme, la taille, la disposition et la capacité des zones d'affichage, et ce en ayant une séparation matérielle entre les différentes zones d'appui entre elles et avec lesdites zones d'affichage.

L'invention a donc plus particulièrement pour but de résoudre ce problème.

Elle propose à cet effet un terminal de communication permettant à un opérateur de transmettre et/ou de recevoir des informations, ce terminal faisant intervenir, couplé à un calculateur, un dispositif d'affichage et de commutation comprenant deux plages superposées, à savoir: une plage d'affichage capable d'afficher des informations, par exemple des symboles, des images ou du texte, par l'excitation d'éléments d'image ou pixels, convenablement adressés par un dispositif électronique piloté par le calculateur, et une plage tactile au moins partiellement transparente présentant une pluralité d'organes de détection tactile gérés par le calculateur, de manière à pouvoir être regroupés en des zones d'appui faisant office de touches.

Selon l'invention, ce terminal est caractérisé en ce qu'il comprend :
- une grille amovible pouvant être choisie parmi une pluralité de grilles présentant des conformations différentes, cette grille comprenant une pluralité d'orifices servant à délimiter des zones d'appui et une ou plusieurs zones d'affichage distinctes des zones d'appui, chaque grille comprenant des moyens permettant son identification,
- un dispositif de lecture des moyens d'identification desdites grilles, ce dispositif de lecture transmettant un signal d'identification, et
- des moyens inclus dans le calculateur pour effectuer, en réponse audit signal d'identification :
- un regroupement des organes de détection tactile de la plage de commutation, de manière à réaliser des zones d'appui délimitées par les orifices de la grille, et la gestion de ces zones d'appui,
- l'affichage de la symbologie affectée aux zones d'appui délimitées par lesdits orifices, et
- la délimitation et la gestion des éléments d'image de la plage d'affichage situés dans les zones d'affichage délimitées par ladite grille.

Un mode de réalisation de l'invention sera décrit ci-après, à titre d'exemple non limitatif, avec référence aux dessins annexés dans lesquels :
La figure 1 est une vue éclatée schématique d'un terminal de communication selon l'invention, associé à un calculateur ;
La figure 2 est une vue en coupe d'un mode d'exécution de l'ensemble grille/panneau de commutation/moyens d'affichage du terminal représenté sur la figure 1 ;
La figure 3 est une vue schématique illustrant les moyens de validation des signaux émis par le panneau de commutation ;
La figure 4 est une représentation schématique d'un mode d'exécution du dispositif d'actionnement de la grille.

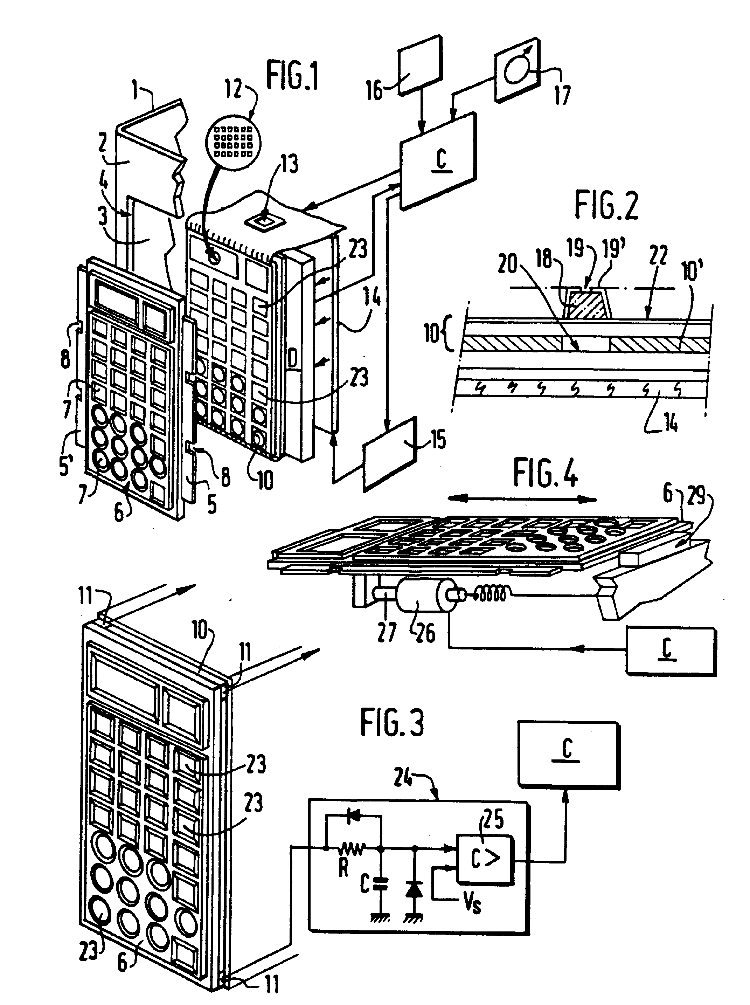

Tel que représenté sur la figure 1, le terminal associé au calculateur C se compose d'un bâti se présentant sous la forme d'un boîtier parallélépipédique 1 (partiellement représenté) dont la face antérieure 2 comprend une fenêtre rectangulaire 3 dont les deux bords latéraux opposés 4 sont munis de glissières.

Dans ces deux glissières viennent s'engager, de manière à pouvoir coulisser, les deux bordures latérales 5, 5′ d'une grille plane amovible 6 en matière au moins partiellement transparente portant une pluralité d'orifices 7 répartis en deux groupes, à savoir : un groupe d'orifices circulaires et un groupe d'orifices carrés. Il serait également possible d'utiliser des orifices présentant des formes différentes. Ainsi, l'utilisation d'orifices triangulaires disposés en quinconce permet d'atteindre une densité maximale d'orifices.

La hauteur de la grille 6 est prévue légèrement supérieure à la hauteur de la fenêtre, de manière à autoriser un léger déplacement de la grille 6 sans découvrir la fenêtre 3.

Les deux bordures latérales 5, 5′ de la grille 6 présentent des encoches personnalisées 8 détectables par un dispositif d'identification D connecté au calculateur C.

Dans cet exemple, le panneau de commutation 10 assume à la fois le rôle de clavier et le rôle d'afficheur, non seulement pour l'affichage de la symbologie affectée aux éléments de commutation, mais également à l'affichage d'informations diverses.

Ce panneau 10, de forme plate, sensiblement aux mêmes dimensions que la fenêtre, est monté à l'intérieur du boîtier 2 de manière à venir s'appliquer contre la grille 6. Ce montage est effectué grâce à des éléments de fixation périphériques 11 (visibles sur la figure 3) associés à des capteurs tels que des jauges de contrainte, des capteurs de pression piézoélectrique, ou tout autre dispositif capable de transformer une force appliquée normalement au panneau 10 en un signal électrique, dont le rôle sera expliqué dans la suite de la description.

D'une façon plus précise, ce panneau 10 comprend, pour sa fonction d'affichage, un afficheur 10′ à réseau de type matriciel capable de constituer une image ou un texte par l'excitation d'éléments d'image ou pixels (représentés schématiquement dans le cercle 12), convenablement adressés par un dispositif électronique 13 lui-même piloté par le calculateur C.

Il peut avantageusement comprendre un dispositif d'affichage à cristaux liquides de type matriciel, à matrice active, fonctionnant en mode transmissif et/ou réflectif. Cet afficheur 10′ pourrait en outre consister en l'écran d'un tube cathodique, ou de tout autre afficheur connu.

Selon ce mode de réalisation, le pas de la matrice de points de l'afficheur (sa résolution) est choisi suffisamment fin de façon à permettre la réalisation de caractères et de graphismes divers tout en conservant la taille du pixel à la limite du pouvoir séparateur de l'oeil, compte-tenu de la distance entre l'oeil de l'opérateur et le dispositif.

Un dispositif d'éclairage 14, de faible épaisseur, par exemple un panneau électroluminescent ou bien un système de tubes fluorescents destinés à assurer la vision des légendes en transmission, est disposé derrière l'afficheur.

Un circuit d'alimentation 15, piloté par le microcalculateur C, adapte le niveau d'éclairement fourni par le dispositif d'éclairage 14 en fonction des commandes de l'opérateur sur un organe de réglage 16 éventuellement complété par un capteur 17 de luminosité ambiante.

Comme précédemment mentionné, la grille amovible 6 peut se présenter sous différents modèles présentant des orifices variables en taille, en forme et en localisation. Cette disposition implique une gestion de la configuration de l'afficheur en relation avec la grille disposée sur sa surface, dont le type est identifié par l'ensemble calculateur C, encoches 8, dispositif d'identification D.

Avantageusement, le profil 18 (partiellement représenté figure 2) et la matière (au moins partiellement transparente) utilisée pour la grille 6 permettront de réaliser une gravure 19 et une peinture 19′ localisée uniquement et partiellement sur la face supérieure de la grille 6. De cette façon, il est possible de délimiter des zones de la grille 6 par exemple de couleurs différentes et présentant une gravure 19, qu'il sera possible de rendre visible de nuit au moyen du dispositif d'éclairage 14 transmis au travers de l'afficheur, grâce à une excitation des pixels 12 d'une zone 20 du panneau 10 située sous la grille au niveau de la gravure à faire apparaître, la lumière diffusant alors dans la grille 6, jusqu'à la gravure supérieure 19, aux endroits voulus.

La fonction clavier du panneau 10 est assurée par une surface tactile 22 disposée entre la grille 6 et l'afficheur. Cette surface tactile pouvant être réalisée notamment à l'aide de moyens connus, tels que les claviers transparents à contact, des systèmes capacitifs ou inductifs ou tout autre système équivalent. Cette surface tactile 22, pilotée par le calculateur C, peut être divisée en une pluralité de zones d'appui 23 formant, en quelque sorte, des touches qui sont chacune situées en regard d'un orifice 7 de la grille 6. La configuration et les emplacements de ces zones 23 sont déterminés par le calculateur C d'après le signal d'identification de la grille 6 émis par l'ensemble formé par les encoches 8 et le dispositif d'identification D qui leur est associé.

La validation du signal de commande émis par une zone d'appui 23 lorsqu'elle se trouve sollicitée, est assurée grâce aux capteurs 11 associés aux éléments de fixation du panneau 10 (figure 3).

Ces capteurs 11 permettent de détecter une pression volontairement exercée par l'opérateur sur une zone d'appui 23 de la surface tactile 22 pour confirmer sa volonté d'agir sur cette zone 23.

Ils sont reliés au calculateur C par l'intermédiaire d'un circuit électronique 24 dont le rôle est de discriminer un appui volontaire exercé sur une surface d'appui 23 (caractérisé par un signal apériodique de valeur moyenne non nulle) d'un effort vibratoire dû à l'environnement (caractérisé par une valeur moyenne sensiblement nulle).

Ce circuit électronique 24 comprend donc une cellule de filtrage des signaux émis par les capteurs (circuit R-C) et un comparateur 25 qui compare le signal détecté et filtré à un signal de seuil VS éventuellement réglable.

Lors du franchissement de ce seuil, ce comparateur 25 transmet au calculateur C un signal signifiant qu'une action de commande volontaire a été exercée sur le panneau de commutation 10. Le calculateur C élabore alors un signal de validation et/ou de prise en compte de la commande sous la forme d'impulsions appliquées à la grille 6.

En effet, dans ce dernier cas, le but recherché est de produire un retour à l'opérateur sous la forme d'un stimuli physiologique appliqué essentiellement au toucher, déjà sollicité par l'appui exercé sur le panneau de commutation 10, éventuellement en complément à une stimulation visuelle ou auditive, par exemple sous la forme d'une modification d'aspect de la zone sollicitée et d'un bip sonore.

Dans l'exemple représenté figure 4, le stimuli tactile est réalisé grâce à un actionnement mécanique en translation de la grille 6 par un organe moteur, ici un électro-aimant 26 commandé par le calculateur C. Cet électro-aimant 26 entraîne un marteau 27 qui vient frapper une enclume 28 solidaire de la grille 6, en produisant ainsi un choc d'amplitude suffisante pour être ressenti par l'opérateur. Un système de butées élastiques 29 réalise la contention de la grille ainsi que l'amortissement du mouvement imprimé.

L'impulsion de mouvement engendrée est calibrée en temps de montée, en durée et en amplitude, de façon à être perçue sans ambiguité par l'opérateur.

Afin de garantir au mieux le contact du doigt avec la grille au moment de l'impulsion, il est favorable de réaliser une grille délimitant des zones d'appui de petite taille au moins dans une dimension, ou des cercles de diamètre voisin de la surface de contact avec le doigt.

Le mode d'exécution précédemment décrit permet d'obtenir une forte densité de touches par unité de surface et, par conséquent, permet un encombrement plus faible pour une complexité donnée, comparativement aux claviers à boutons-poussoirs.

## Revendications

1. Terminal de communication à composition variable permettant à un opérateur de transmettre et/ou de recevoir des informations, ce terminal faisant intervenir, couplé à un calculateur (C), un panneau d'affichage et de commutation (10) comprenant deux plages superposées, à savoir : une plage d'affichage (10′) capable d'afficher des informations, par exemple des symboles, des images ou du texte, par l'excitation d'éléments d'image ou pixels, convenablement adressés par un dispositif électronique piloté par le calculateur, et une plage tactile (22) au moins partiellement transparente, présentant une pluralité d'organes de détection tactile gérés par le calculateur, de manière à pouvoir être regroupés en des zones d'appui (23) faisant office de touches,
caractérisé en ce qu'il comprend en outre :
- une grille amovible (6) pouvant être choisie parmi une pluralité de grilles présentant des conformations différentes, cette grille (6) comprenant une pluralité d'orifices (7) servant à délimiter des zones d'appui et une ou plusieurs zones d'affichage distinctes des zones d'appui, chaque grille (6) comprenant des moyens (8) permettant son identification,
- un dispositif de lecture (D) des moyens d'identification desdites grilles, ce dispositif de lecture (D) transmettant au calculateur (C) un signal d'identification, et
- des moyens inclus dans le calculateur (C) pour effectuer, en réponse audit signal d'identification:
- un regroupement des organes de détection tactile de la plage de commutation, de manière à réaliser des zones d'appui (23) délimitées par les orifices (7) de la grille (6), et la gestion de ces zones d'appui (23),
- l'affichage de la symbologie affectée aux zones d'appui (23) délimitées par lesdits orifices (7), et
- la délimitation et la gestion des éléments d'image (12) de la plage d'affichage (10′) situés dans les zones d'affichage délimitées par ladite grille (6).

2. Terminal selon la revendication 1,
caractérisé en ce que la susdite plage de visualisation (10′) consiste en un dispositif d'affichage à cristaux liquides de type matriciel, à matrice active fonctionnant en mode transmissif et/ou réflectif.

3. Terminal selon la revendication 2,
caractérisé en ce que le dispositif d'affichage (10′) est de type transmissif, et en ce que des moyens d'éclairage (14) tels qu'un panneau électroluminescent ou qu'un système de tubes fluorescents sont disposés derrière le dispositif d'affichage.

4. Terminal selon l'une des revendications précédentes,
caractérisé en ce que la susdite plage tactile (22) consiste en un clavier plat à contacts électroniques sensitifs, de type capacitif ou inductif.

5. Terminal selon l'une des revendications précédentes,
caractérisé en ce que la face antérieure de la grille (6) est partiellement recouverte d'une couche opaque (19′) sur laquelle est formée une gravure (19), et en ce que le susdit calculateur comprend des moyens permettant d'exciter les pixels situés sous la structure de la grille (6) de manière à permettre un éclairage de ladite gravure (19), aux endroits voulus.

6. Terminal selon l'une des revendications précédentes,
caractérisé en ce qu'il comprend des moyens de réglage (16, 17) du niveau d'éclairement fourni par les susdits moyens d'éclairage (14), ces moyens de réglage (16, 17) pouvant être commandés par un détecteur de luminosité ambiante.

## Patentansprüche

1. Kommunikationsterminal mit variabler Struktur, das es einer Bedienungsperson ermöglicht, Informationen zu übertragen und/oder zu empfangen, wobei dieses Terminal eine mit einem Rechner (C) gekoppelte Anzeige- und Schalttafel (10) verwendet, die zwei übereinanderliegenden Bereiche aufweist, d.h. einen Anzeigebereich (10′), der durch die Erregung von Bildelementen oder Pixeln, die durch eine vom Rechner gesteuerte elektronische Vorrichtung entsprechend adressiert werden, Informationen wie z.B. Symbole, Bilder oder Text anzeigen kann, und einen Tastbereich (22), der mindestens teilweise transparent ist und eine Vielzahl von Organen zur Tasterfassung aufweist, die vom Rechner verwaltet werden, dereart, daß sie in Druckzonen (23) gruppiert werden können, die als Tasten dienen, dadurch gekennzeichnet, daß es weiter aufweist:
- ein abnehmbares Gitter (6), das aus einer Vielzahl von Gittern mit verschiedenen Gestaltungen ausgewählt werden kann, wobei dieses Gitter (6) eine Vielzahl von Öffnungen (7) aufweist, die Druckzonen und eine oder mehrere von den Druckzonen verschiedene Anzeigezonen abgrenzen, wobei jedes Gitter (6) Mittel (8) aufweist, die seine Identifizierung ermöglichen,
- eine Lesevorrichtung (D) der Identifikationsmittel dieser Gitter, wobei diese Lesevorrichtung (D) dem Rechner (C) ein Identifikationssignal übermittelt, und
- im Rechner (C) enthaltene Mittel, um als Antwort auf dieses Identifikationssignal auszuführen:
- eine Gruppierung der Tasterfassungsorgane des Schaltbereichs, um Druckzonen (23) zu erstellen, die durch die Öffnungen (7) des Gitters (6) abgegrenzt werden, und die Verwaltung dieser Druckzonen (23),
- die Anzeige der den von den Öffnungen (7) abgegrenzten Druckzonen (23) zugeordneten Symbolik, und
- die Abgrenzung und die Verwaltung der Bildelemente (12) des Anzeigebereichs (10′), die sich in den von diesem Gitter (6) abgegrenzten Anzeigezonen befinden.

2. Terminal nach Anspruch 1, dadurch gekennzeichnet, daß der Anzeigebereich (10′) aus einer matrixartigen FlüssigkristallAnzeigevorrichtung besteht, mit einer aktiven Matrix, die im durchlassenden und/oder reflektierenden Modus arbeitet.

3. Terminal nach Anspruch 2, dadurch gekennzeichnet, daß die Anzeigevorrichtung (10′) vom durchlassenden Typ ist, und daß Beleuchtungsmittel (14), z.B. eine elektrolumineszierende Tafel oder ein System fluoreszierender Rohre, hinter der Anzeigevorrichtung angeordnet sind.

4. Terminal nach einem der vorhergehenden Ansprüche, dadurch gekennzeichnet, daß dieser Tastbereich (22) aus einer flachen Tastatur mit elektronischen,Berührungskontakten vom kapazitiven oder induktiven Typ besteht.

5. Terminal nach einem der vorhergehenden Ansprüche, dadurch gekennzeichnet, daß die Rückseite des Gitters (6) teilweise von einer undurchsichtigen Schicht (19′) bedeckt ist, auf der eine Gravur (19) ausgebildet ist, und daß der Rechner Mittel aufweist, die es ermöglichen, die unter der Struktur des Gitters (6) angeordneten Pixel zu erregen, um eine Beleuchtung dieser Gravur (19) an den gewünschten Stellen zu ermöglichen.

6. Terminal nach einem der vorhergehenden Ansprüche, dadurch gekennzeichnet, daß es Einstellmittel (16, 17) für den von den Beleuchtungsmitteln (14) gelieferten Beleuchtungspegel aufweist, wobei diese Einstellmittel (16, 17) von einem Umgebungshelligkeitsdetektor gesteuert werden können.

## Claims

1. A variable-composition communications terminal enabling an operator to transmit and/or receive information, said terminal using, coupled to a computer (C) , a display and switching device (10) comprising two superimposed areas, i.e. a display area (10′) capable of displaying data, e.g. symbols, images or text, by energization of image elements or pixels, suitably addressed by an electronic device controlled by said computer, and an at least partially transparent touch-sensitive area (22) having a plurality of touch-detection units managed by said computer, in such a way as to be capable of being grouped together into pressing zones (23) serving as keys, characterized in that it further comprises:
- a detachable grid (6) that can be selected from among a plurality of grids having different conformations, said grid (6) comprising a plurality of holes (7) serving to delimit pressing zones and one or more display zones separate from said pressing zones, each grid (6) comprising means enabling it to be identified,
- a device (D) for reading the identification means of said grids, said reading device (D) transmitting an identification signal to the computer (C), and
- means included in said computer (C), for carrying out, in response to said identification signal:
- a grouping together of the touch detection units of said switching area, so as to constitute pressing zones (23) delimited by the holes (7) of said grids (6), as well as the management of said pressing zones (23),
- display of the symbology attributed to said pressing zones (23) delimited by said holes (7),
- delimitation and management of said image elements (12) of said display area (10′) situated in said display zones delimited by said grid (6).

2. The terminal as claimed in claim 1, characterized in that the aforesaid visualization area (10′) consists in a matrix type liquid crystal display device, with an active matrix, operating in the transmissive and/or reflective mode.

3. The terminal as claimed in claim 2, characterized in that said display device (10′) is of the transmissive type, and in that a lighting means (14) such as an electroluminescent panel or fluorescent tube system is placed behind the display device.

4. The terminal as claimed in any one of the previous claims, characterized in that the aforesaid touch-sensitive area (22) consists in a flat keyboard with sensitive electronic contacts, of the capacitive or inductive type.

5. The terminal as claimed in any one of the previous claims, characterized in that the front side of said grid (6) is partially covered with an opaque layer (19′) on which an engraving (19) is formed, and in that the above-mentioned computer comprises a means enabling energization of said pixels situated beneath the grid structure (6) so as to enable lighting of said engraving (19), at the required places.

6. The terminal as claimed in any one of the previous claims, characterized in that it comprises adjusting means (16, 17) for the level of lighting provided by the aforesaid lighting means (14), said adjusting means (16, 17) being capable of being commanded by an ambient luminosity detector.
